# EUROPEAN PATENT SPECIFICATION

(11) **EP 1 295 500 B1**
(45) Date of publication and mention of the grant of the patent: **27.05.2009**
(21) Application number: 01907590.2
(22) Date of filing: 08.02.2001
(51) Int. Cl.: H04W 4/02, H04W 64/00

(54) **POSITIONING SYSTEM**
POSITIONIERUNGSSYSTEM
SYSTEME DE LOCALISATION

(30) Priority: 09.02.2000 FI 20000268
(43) Date of publication of application: 26.03.2003
(73) Proprietor: Benefon Oyj, 23100 Salo (FI)
(72) Inventor: SIKILÄ, Sami, FIN-20100 Turku (FI)
(74) Representative: Lahti, Heikki
(86) International application number: PCT/FI2001/000112
(87) International publication number: WO 2001/060100

(56) References cited:
- WO-A1-00/44188
- WO-A1-98/52379
- WO-A2-98/00988
- PATENT ABSTRACTS OF JAPAN & JP 08 212 497 A (AQUEOUS RES:KK) 20 August 1996

## Description

The present invention relates to a positioning system, which uses Global Positioning System (GPS) and a mobile communications network (PLMN) according to the introductory section of the claim 1.

From EP publication 950598 Al (Deut Bahn AG), a compact device is known, which comprises a CPU, GPS receiver, GSM nodule, a combined GPS/GSM antenna, a three-dimensional coordinate-measuring device, user interface and chargeable battery. The parts of the receiver are fit into one casing, and the device is designed to transmit the produced position data, using the GPS receiver, through the GSM network to the customer service center. The device can thus be used to track and monitor moving subjects. The disadvantages of the device are that it only transmits the position data to a previously selected, immobile service center, and that the device cannot be activated into the transmission mode by an outsider.

From DE publication 19640068 A (Alcatel Alsthom cie Gen Electricite), a destination-locating device is already known, which is intended for use, for example, in GPS, GSM and NAV navigation, for determining the actual position of a vehicle. In this device, the valuation unit determines the direction towards the destination. Entered data, such as a phone number, is used to individualize the destination. These are interpreted by a comparison unit in order to obtain the coordinates of the destination, which are then compared with the actual position, in order to display the direction on a monitor or announce it on a loudspeaker. The device is in communication with a GSM communications system in order to procure additional services.

From US patents 5461365 (Dan Schlager et al.), 5650770 (Dan Schlager et al.) and 5963130 (Zoltar Satellite Alarm Systems, Inc.), a wireless system is already known, which is used for monitoring certain remote mobile stations from a base station and for activating alarms when the selected parameter values have been exceeded, for example, when the set distance between a remote station and the base station is exceeded. A remote station, according to US publications 5650770 and 5963130, can include equipment for receiving position data from satellites and for intercession via radio channels from the remote station to the base station. The problem with these kinds of alarm and tracking systems is that they do not have the encompassing range that mobile communications networks, like PLMN's, have, and the radius of effect of these systeMS1 s limited to the range of the base station's antenna which radiates 360. Since this is a question of an alarm and tracking system, this also poses an essential risk, in the event that an alarm is given to a remote station that has, for some reason, drifted beyond the antenna range of the base station.

The primary object of the present invention is to provide a new kind of way to determine the position of a desired subject mobile station(s) of a mobile communications network, by which the position(s) of the subject station(s) is conveyed to the inquiring mobile station of the mobile communications network. A secondary object of the present invention is to eliminate, or at least reduce, the weaknesses and disadvantages already associated with conventional means of position determination and tracking remote stations.

These objects are accomplished by means of the positioning system and method mentioned in the beginning, which uses GYPS and a mobile communications network (PLMN), the specific characteristics of which are presented in the accompanying claims.

The invention is thus based on a new and inventive idea, that data on the position of one subject mobile station, which is a combination, for example, of a GSM communications system and a GPS receiver, and which has the capacity to deter mine its own position using GPS, is transmitted to the inquiring mobile station through a mobile communications network using a data transmission connection which is supported by the mobile communications network, advantageously SMS (Short Message Service) or a corresponding data transmission system. When this inquiry is affirmatively answered in the second subject mobile station, the formation and transmission of position data through the mobile communications network to the first inquiring mobile station is initiated, and finally, the position of the second mobile station appears on the display of the first mobile station.

According to an advantageous embodiment of the invention, the mobile station comprises a mapping system, whereby, once the subject mobile station's position data has been received in the inquiring mobile station, the position data functions as the key information for displaying a map base on the display of the inquiring mobile station.

When the positioning service is implemented as a network service, the mapping system can be a PLMN element or a service provider system, which is in data transmission communication with a mobile phone center, whereupon the necessary map information can be added to the position data transmitted from the subject mobile station to the inquiring mobile station. Thus, one advantage is that less memory is necessary in the mobile station.

The invention will now be explained in more detail, by way of a certain advantageous embodiment, with reference to the accompanying drawing, in which
FIG.1 diagrammatically illustrates a positioning system, according to the invention, which uses GPS,
FIG.2 illustrates, with a flow chart, the process of a positioning method, which uses GPS, according to the invention, and
Figure 3 illustrates, with another flow chart, a computer program, according to the invention, for controlling a positioning system which uses GPS and a mobile communications network PLMN.

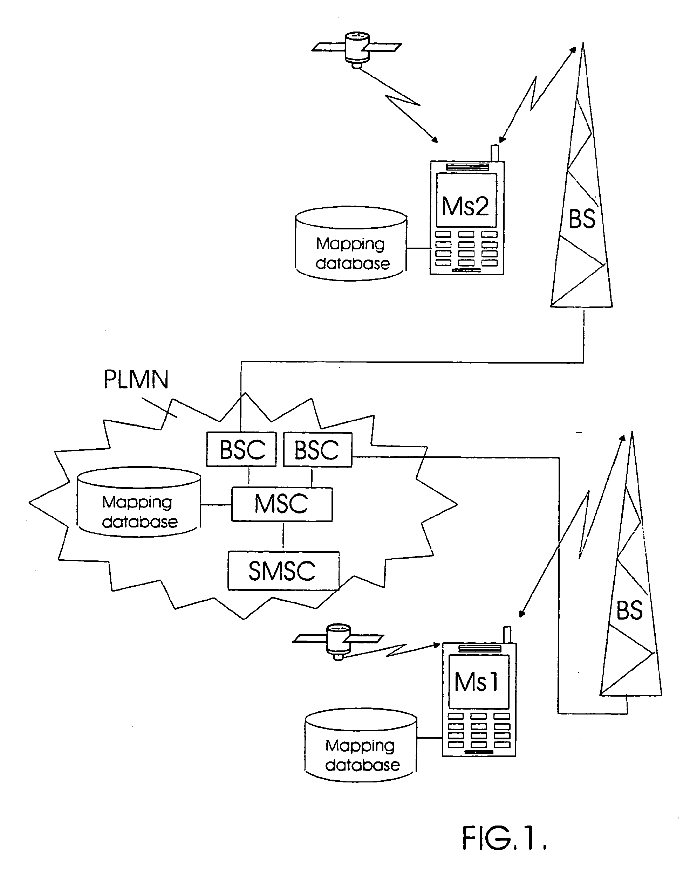

As Figure 1 illustrates, a system formed according to the invention comprises a mobile communications network PLMN (Public Land Mobile Network), the base stations (BS) which are in communication with mobile communications stationsMS1 (Mobile Station 1) and MS2 (Mobile Station 2) via a wireless radio channel. The mobile communications network PLMN differs from fixed telecommunications networks, in that the mobile communications stationsMS1 and MS2 can move within the entire network area, and they are involved in active communication with the mobile communications network PLMN. A fixed telecommunications network is a passive network, in which communication between the terminal and the network can only occur from the terminal.

The present invention utilizes the basic characteristics of a mobile communications network PLMN, which can be, for example,
GSM (Global System for Mobile Communications), 900,180011900
PCS (Personal Communications Services)
DAMPS (Digital American Mobile Phone System),
PDC (Personal Digital Cellular),
UMTS (Universal Mobile Telecommunications System).
Mobile communications network PLMN terminals are not technically bound to a defined location, such as an electrical network or stationary communications network connection, and an essentially broad, encompassing service area is characteristic to a mobile communications network. Additionally, in a system formed according to the invention, the mobile communications stationsMS1 and MS2 comprise a combination of a mobile communications system intended for telecommunications, and a GPS receiver for navigation. Thus, a terminal formed according to the invention is able to determine its own position data using GPS (Global Positioning System) satellite 2, and to transmit its position data to the mobile communications network PLMN.

In the mobile communications network, regardless of the type of network, short message and/or data transmission has been pre-defined, and/or standardized, without exception, and therefore is already known to professionals in the field. Concerning these, reference here is only being made to network-related recommendations, stipulations and standards. For example, ETSI publications GSM 04-11, GSM 03-40 and GSM 07-05 relate to the transmission of short messages in GSM and/or UMTS mobile communications network.

In a recommended embodiment of the invention, in addition to a program memory, the GPS/GSM mobile station also comprises a mapping system or database 1, whereupon using the GPS satellite map coordinates and a map base, based on the map coordinates obtained from the mapping database, the position of a GPS/GSM mobile station, at any given time, can be made graphically visible on the map base. When an inquiry for position data is sent as a data transmission using a data transmission method which supports mobile communications networks, advantageously SMS or a corresponding method, from the first inquiring mobile station MS1 to the second mobile station MS2, and when this position data inquiry is affirmatively answered at the second mobile station MS2, an action is triggered, which joins the map coordinates and the map base, and encloses this body of data into the first mobile station as a reply message, using data transmission based on a data transmission method, which supports the mobile communications network, advantageously SMS, GSM-data, or corresponding method. The first mobile station MS1 automatically or manually decodes the received reply using the menu function, and shows the position of the second mobile communications station MS2 on a map base on its display.

In this context, it must be noted, that it is not necessary to include a map base indicating the position of the second mobile station MS2 in the reply message being formulated in the second mobile station for transmission to the inquiring mobile station MS1 ; rather, alternatively, only the map coordinates, which were obtained using GPS, are transmitted from the second mobile station MS2, and a map base is selected from the mapping system or database 1 in the first mobile station MS1, on the basis of these map coordinates of the second mobile station MS2, and the position data of the second mobile station appears on the display of the inquiring mobile station MS1 on a map base.

Further, it must be noted, that the mapping system or database 1, can also take the form of a mobile communications network PLMN. element. Thus, it would not be necessary to equip any of the mobile stations MS with a mapping system or database. Instead, only coordinate data about the positioning of the second mobile station MS2 obtained using GPS is transmitted from the second station MS2 as a reply to the position data inquiry to the PLMN. The coordinate data forms the basis according to which the map base is added from the mapping system or database to the coordinate data, and this comprehensive body of data is then transmitted as a data transmission, using a transmission method supported by a mobile communications network, advantageously SMS or other such method, to the first mobile station MS1, which decodes the received data message, either automatically or manually, for example, using the menu function, and shows the positioning of the second mobile station MS2 on its display on a map base.

The mapping system or database1 can also be implemented using a service provider system (not illustrated in Figure 1) which is in communication with a mobile communications network PLMN. Thus, it would not be necessary to equip any of the mobile stations MS with a mapping system or database, whereupon the first connection to the service provider system is made as a data transmission connection from the first mobile station MS1, advantageously via SMS or other data transmission method supported by a mobile communications network; a data transmission connection to the second mobile station MS2 then being further formed from the service provider system, advantageously in the form of an SMS transmission or other data transmission method supported by a mobile communications network, in order to transmit the position data inquiry, while the positioning coordinates for the second mobile station MS2, which are obtained using GPS, are transmitted as a reply to the position data inquiry, advantageously by SMS or other data transmission method supported by a mobile communications network, from the second mobile station MS2 as a data transmission to the service provider system, which is connected to the PLMN. This coordinate data then forms the basis used by the mapping system or database of the service provider to integrate the map base with the coordinate data. This comprehensive body of data is then transmitted, advantageously using SMS or other data transmission method supported by a mobile communications network, to the first mobile station MS1, which decodes the received data message, either automatically or manually, for example, using the menu function, and shows the position of the second mobile communications station MS2 on a map base on its display.

According to the invention, the second mobile station MS2 can reply to the position data inquiry automatically, whereupon there is a register connected to the program memory which is in the second mobile station MS2, and which controls the positioning system. The register is a record of those inquiring for positioning data, advantageously the subscriber number and A-connections of the inquirers, thus the second mobile station MS2 can respond automatically to position data inquiries made by those inquirers, according to the program which controls the system. According to the invention, the reply to the position data inquiry made by the second mobile station MS2 can also be made manually, whereupon, according to the computer program which runs the system, a selection can be made at the second mobile station MS2, to either enable the reply, or to disable it; according to the invention, it is advantageous to base the selection on the menu function of the program which runs the system.

According to the invention, the decode and display position inquiry item on the computer program which controls the positioning system in the first mobile station MS1, decodes the received data message and shows the position of the second mobile station MS2 on a map base on the display at the first mobile station MS1, either manually, for example using the menu function included in the computer program, or automatically, immediately and directly controlled by the computer program.

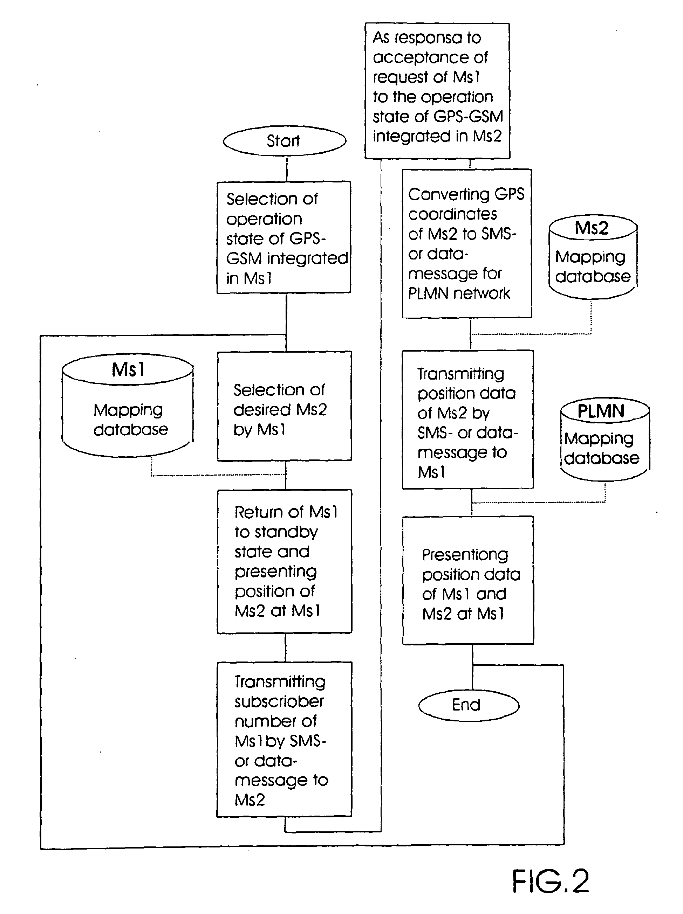

Figure 2 illustrates a computer-controlled GPS and a positioning system which uses a mobile communications network PLMN, according to the invention, for manually determining the position of the desired second independent mobile station MS2, from the inquiring, first independent mobile station MS1. This kind of computer-program-operated comprehensive system minimally comprises the phases:
- Formation of the position inquiry in the first mobile station MS1,
- Transmission of the position inquiry from the first mobile station MS1, -Reception of the position inquiry at the second mobile station MS2,
- Determination of the positioning of the second mobile station MS2 in the second mobile station,
- Transmission of the reply to the position inquiry from the second mobile station,
- Reception of the position inquiry reply at the first mobile station MS1, and
- Display of the second mobile station's MS2 positioning at the first mobile station MS1.

When the invention concerns the tracking of a second independent mobile station MS2, independent of the first independent mobile station MS1, the computer program which runs the system, according to an advantageous embodiment of the invention, comprises at least two parts, such that the items of the computer program, which control the following phases
- formation of the position inquiry,
- transmission of the position inquiry,
- reception of the position inquiry reply, and
- display of the positioning of the second mobile station MS2,
   are set up in the first mobile station MS1, and such that the computer program items, which control the following phases:

- reception of the position inquiry,
- determination of the second mobile station's MS2 position, and
- transmission of the reply to the position inquiry,
   are set up in the second mobile station MS2.

In order to enable the position of the second mobile station MS2 to appear on the display of the first mobile station MS1 on a map base, the computer program includes an additional phase, whereby the map information corresponding to the position of the second mobile station MS2 is incorporated into the position inquiry reply message from the second mobile station MS2. The computer program item which controls this phase is thus in the second mobile station MS2.

The position of the second mobile station MS2 can also appear on the first mobile station'sMS1 display on a map base thus; the computer program includes an additional phase, in which the map information corresponding to the positioning of the second mobile station MS2, is integrated into the position inquiry reply after the position inquiry reply has been received at the first mobile station MS1. Thus, the computer program item which controls this phase is in the first mobile station.

If the mapping system or database in a system according to the invention is set up for a PLMN, or for a service provider system which is in communication with a PLMN, the item of the computer program which controls the integration of the map information with the position data of the second mobile station, which is included in the position data inquiry reply, is correspondingly adapted either to the PLMN element or to the service provider system, to which the mapping system or database is connected.

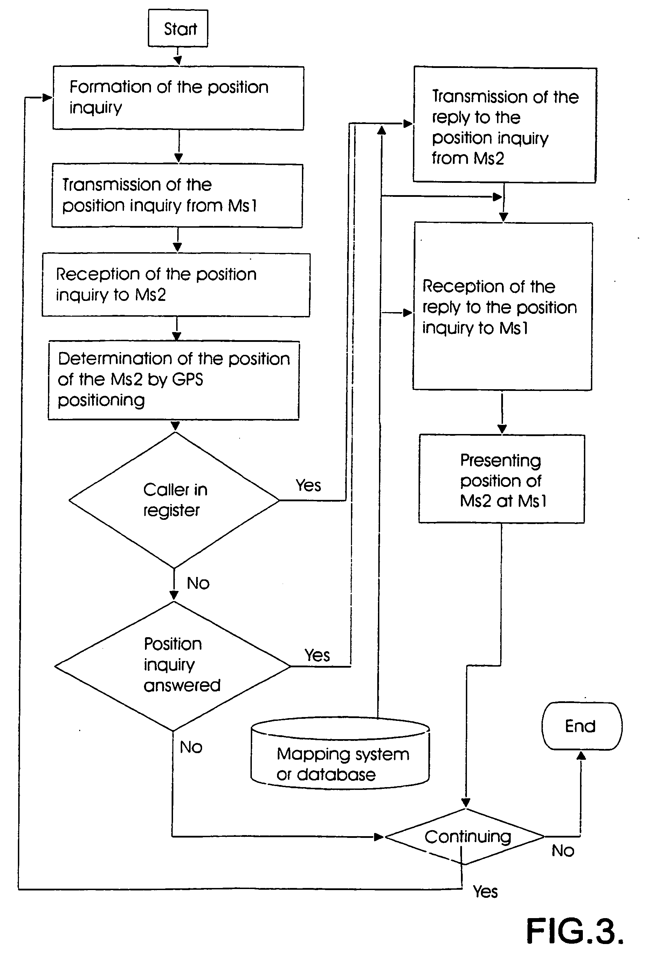

Figure 3 illustrates, in the form of a flow chart, a computer program, according to the invention, for controlling a positioning system and method which uses GPS and a mobile communications network PLMN, with the objective of determining the position of the second independent mobile station MS2 from the first independent mobile station MS1.

When run by a computer program, the following phases occur consecutively after the positioning process has been activated or initiated:
- formation of the position inquiry in the first mobile station MS1,
- transmission of the position inquiry from the first mobile station MS1, whereupon the second independent mobile station MS2 is the destination address in the transmission,
- reception of the position inquiry at the second mobile station MS2,
- determination of the positioning of the second mobile station MS2 using GPS in the second mobile station,
- transmission of the reply to the position inquiry from the second mobile station MS2, whereupon the first mobile station MS1 is the destination address in the transmission,
- reception of the position inquiry reply at the first mobile station MS1,
- display of the second mobile station's MS2 positioning at the first mobile station MS1.

According to a specific embodiment of the invention, the position of the second mobile station MS2 is shown on the display of the first mobile station MS1 on a map base. In order for this to happen, there is a mapping system or database1 in the first mobile station, from which, on the basis of the position of the second mobile station MS2, the correct map base information is obtained, so that it is incorporated into the position data inquiry reply transmitted to the first mobile station SMS1. Alternatively, the position inquiry reply transmitted from the second mobile station MS2 may only include the position coordinates of the second mobile station MS2, and the first mobile station MS1 1 then has a mapping system or database 1, from which, on the basis of the position of the second mobile station MS2, the correct map base can be obtained after the position inquiry reply has been received, to be displayed integrated at the first mobile station MS1. It must still be stated, that the mapping system or database 1 can also be set up for a PLMN, or for a service provider system which is in communication with a PLMN, whereupon the map base is incorporated into the position inquiry reply transmitted in the PLMN, or service provider system which is in communication with a PLMN, from the second mobile station MS2, and the position of the second mobile station MS2 is shown on a map base on the display of the first mobile station MS1.

The invention has only been explained above by way of its alternative examples of application and by way of its certain advantageous embodiment. This is naturally not to be limited in any way, and, as is evident to the professionals of the field, many alternative applications and variations is possible within the scope of the frames of the new and inventive idea, defined in the accompanying claims.

## Claims

1. A positioning system which uses GPS positioning and a mobile communications network (PLMN) and at least two mobile communications stations (MS1, MS2), each of which supports SMS messaging and being provided with a GPS receiver means and with a mapping system or database (1) means for determining and displaying a position of the mobile station on the display of the mobile station, in which system a first inquiring mobile station (MS1) transmits a position inquiry by means of SMS message via the mobile communications network (PLMN) to at least one second mobile station (MS2), the position of which is desired to be determined, and in which system an affirmative reply to the position inquiry of the first mobile station (MS1) at the second mobile station (MS2) initiates the formation of the position data at the second mobile station (MS2) and the transmission of the said position data from the second mobile station (MS2) via the mobile communications network (PLMN) to the first mobile station (MS1), **characterized in that** the position data transmission from the second mobile station (MS2) via the mobile communications network (PLMN) to the first mobile station (MS1) is also a SMS message, that each mobile station (MS1, MS2) of the positioning system comprises the mapping system or database (1) for adding map data about the second mobile station (MS2) to the reply message, and that the positions of each of the second mobile stations (MS2) are displayed at the first mobile station (MS1).

2. A positioning system according to claim 1, **characterized in that** the reply message transmitted to the first mobile station (MS1) in response to the position data inquiry includes both the map data and the position data about the second mobile station (MS2), and that the reply message is decoded in the first mobile station (MS1).

3. A positioning system according to claim 1, **characterized in that** the reply message transmitted to the first mobile station(MS1) in response to the position data inquiry only includes position data about the second mobile station (MS2), and that the map data corresponding to the position of the second mobile station (MS2) is obtained from the mapping system or database (1) of the first mobile station (MS1), on the basis of the position data of the second mobile station (MS2) received at the first mobile station (MS1), and that position data in the reply message is decoded in the first mobile station (MS1).

4. A positioning system according to any of the preceding claims 1-3, **characterized in that**, in order for the position data inquiry to be manually answered at the second mobile station (MS2), an option is selected in the computer program which runs the positioning system, which either enables the reply, or disables it.

5. A positioning system according to any of the preceding claims 1-4, **characterized in that**, in order for the position inquiry to be automatically answered at the second mobile station (MS2), a register is connected to the program memory which runs the positioning system, which contains the position inquirers, advantageously a list of the subscriber numbers or A-connections of the inquirers, the position inquiries of whom the second mobile station (MS2) answers automatically, according to the program which runs the system.

6. A positioning system according to any of the preceding claims 1-5, **characterized in that** the reply to the position data inquiry becomes visible at the first mobile station (MS1) automatically when the system is being run by the computer program.

7. A positioning system according to any of the preceding claims 1-6, **characterized in that**, in order to display the position data inquiry reply at the first mobile station (MS1) manually, an option is selected in the computer program which runs the positioning system, which either enables the reply to be displayed, or disables it.

8. A positioning system according to any of the preceding claims 1-7, **characterized in that** the computer program which runs the positioning system has at least two parts, whereupon one item of the computer program, which runs these phases:
- the formation of the position inquiry,
- the transmission of the position inquiry,
- the reception of the reply to the position inquiry and
- the displaying of the position of the second mobile station (MS2)
is located in the program memory of the first mobile station (MS1), and whereupon the second item of the computer program, which runs these phases:
- the reception of the position inquiry,
- the determination of the position of the second mobile station (MS2) and
- the transmission of the reply to the position inquiry
is located in the program memory of the second mobile station (MS2).

## Patentansprüche

1. Eine Navigationsanlage, die die GPS Positionierung und ein bewegliches Kommunikationsnetz (PLMN) und mindestens zwei bewegliche Kommunikationen Stationen (MS1, MS2), von denen jedes stützt SMS Nachrichtenübermittlung verwendet und, versehend mit Mitteln eines GPS Empfängers und mit einem Einteilungssystem oder einer Datenbank (1), für die Bestimmung und das Anzeigen einer Stellung der beweglichen Station auf der Anzeige der beweglichen Station bedeutet, in deren System eine erste wißbegierige bewegliche Station (MS1) eine Position Anfrage mittels der SMS Anzeige über das bewegliche Kommunikationsnetz (PLMN) mindestens einer Sekunde beweglichen Station ( MS2) übermittelt, dessen Position gewünscht wird festgestellt zu werden, und in welchem System ein bestätigendes Antwort auf die Position Anfrage der ersten beweglichen Station (MS1) an der zweiten beweglichen Station (MS2) leitet die Anordnung der Position Daten an der zweiten beweglichen Station (MS2) und das Getriebe der besagten Position Daten von der zweiten beweglichen Station (MS2) über das bewegliche Kommunikationsnetz (PLMN) zur ersten beweglichen Station ein (MS1), **gekennzeichnet dadurch, daß** die Position Datenübertragung von der zweiten beweglichen Station (MS2) über das bewegliche Kommunikationsnetz (PLMN) zur ersten beweglichen Station (MS1) auch eine SMS Anzeige ist, daß jede bewegliche Station (MS1, MS2) der Navigationsanlage das Einteilungssystem oder die Datenbank (1) für das Hinzufügen von Diagrammdaten über die zweite bewegliche Station (MS2) der Antwortanzeige enthält und daß die Positionen von jeder der zweiten beweglichen Stationen (MS2) an der ersten beweglichen Station ( MS1) angezeigt werden.

2. Eine Navigationsanlage entsprechend Anspruch 1, **gekennzeichnet dadurch, daß** die Antwortanzeige, die der ersten beweglichen Station (MS1) übermittelt wird in Erwiderung auf die Position Datenanfrage die Diagrammdaten und die Position Daten über die zweite bewegliche Station (MS2) einschließt und daß die Antwortanzeige in der ersten beweglichen Station (MS1) decodiert wird.

3. Eine Navigationsanlage entsprechend Anspruch 1, **gekennzeichnet dadurch, daß** die Antwortanzeige, die der ersten beweglichen Station (MS1) übermittelt wird in Erwiderung auf die Position Datenanfrage nur Position Daten über die zweite bewegliche Station (MS2) einschließt und daß die Diagramm daten, die der Position der zweiten beweglichen Station (MS2) entsprechen vom Einteilungssystem oder von der Datenbank (1) der ersten beweglichen Station (MS1) erhalten werden, auf der Grundlage von die Position Daten der zweiten beweglichen Station (MS2) empfangen an der ersten beweglichen Station (MS1) und daß Position Daten in der Antwort anzeige in der ersten beweglichen Station (MS1) decodiert werden.

4. Eine Navigationsanlage entsprechend irgendwelchen der vorausgegangenen Forderungen 1-3, **gekennzeichnet** in der damit die an der zweiten beweglichen Station (MS2) manuell geantwortet zu werden Position Daten anfrage, eine Wahl im Computerprogramm vorgewählt wird, das die Navigationsanlage laufen läßt, der entweder der Antwort ermöglicht, oder sperrt sie.

5. Eine Navigationsanlage entsprechend irgendwelchen der vorausgegangenen Forderungen 1-4, **gekennzeichnet** in dem damit die an der zweiten beweglichen Station (MS2) automatisch geantwortet zu werden Position Anfrage, ein Register an das Programmgedächtnis angeschlossen wird, das die Navigationsanlage laufen läßt, die die Position Nachforschenden, vorteilhaft eine Liste von den Teilnehmer zahlen oder Ein-Anschlüsse den Nachforschenden enthält, deren Position Anfragen die zweiten beweglichen Antworten der Station (MS2) automatisch, entsprechend dem Programm, das das System laufen läßt.

6. Eine Navigationsanlage entsprechend irgendwelchen der vorausgegangenen Forderungen 1-5, **gekennzeichnet** in der wird die Antwort auf die Position Datenanfrage an der ersten beweglichen Station (MS1) automatisch sichtbar, wenn das System durch das Computerprogramm laufen gelassen wird.

7. Eine Navigationsanlage entsprechend irgendwelchen der vorausgegangenen Forderungen 1-6, **gekennzeichnet** in der zwecks die Position Datenanfrage Antwort an der ersten beweglichen Station (MS1) manuell anzuzeigen wird eine Wahl im Computerprogramm vorgewählt, das die Navigationsanlage laufen läßt, die entweder der Antwort ermöglicht, angezeigt zu werden, oder sie sperrt.

8. Eine Navigationsanlage entsprechend irgendwelchen der vorausgegangenen Forderungen 1-7, **gekennzeichnet** in dem hat das Computerprogramm, das die Navigationsanlage laufen läßt, mindestens zwei Teile, worauf ein Einzelteil des Computerprogramms, das diese Phasen laufen läßt:
• die Anordnung der Position Anfrage,
• das Getriebe der Position Anfrage,
• die Aufnahme der Antwort auf die Position Anfrage und
• das Anzeigen der Position der zweiten beweglichen Station (MS2)
ist im Programmgedächtnis der ersten beweglichen Station (MS1) und worauf das zweite Einzelteil des Computerprogramms, das diese Phasen laufen läßt:
• die Aufnahme der Position Anfrage,
• die Ermittlung der Position der zweiten beweglichen Station (MS2) und
• das Getriebe der Antwort auf die Position Anfrage
ist im Programmgedächtnis der zweiten beweglichen Station (MS2).

## Revendications

1. Un système de positionnement qui emploie le positionnement de GPS et un réseau de transmissions mobile (PLMN) et au moins deux stations mobiles de communications (MS1, MS2), qui soutient la transmission de messages de SMS et étant équipé en moyens d'un récepteur de GPS et de système traçant ou de base de données (1) signifie pour déterminer et montrer une position de la station mobile sur l'affichage de la station mobile, dans laquelle le système une première station mobile de investigation (MS1) transmet une enquête de position au moyen de message de SMS par l'intermédiaire du réseau de transmissions mobile (PLMN) au moins à station mobile d'une seconde (MS2), la position dont est désiré pour être déterminé, et dans quel système une réponse affirmative au l'enquête de position de la première station mobile (MS1) à la deuxième station mobile (MS2) lance la formation des données de position à la deuxième station mobile (MS2) et la transmission de lesdites données de position de la deuxième station mobile (MS2) par l'intermédiaire du réseau de transmissions mobile (PLMN) à la première station mobile (MS1), **caractérisé par**ce que la transmission de données de position de la deuxième station mobile (MS2) par l'intermédiaire du réseau de transmissions mobile (PLMN) à la première station mobile (MS1) est également un message de SMS, que chaque station mobile (MS1, MS2) du système de positionnement comporte le système traçant ou la base de données (1) pour ajouter des données de carte au sujet de la deuxième station mobile (MS2) au message de réponse, et que les positions de chacune des deuxièmes stations mobiles (MS2) sont montrées à la première station mobile (MS1).

2. Un système de positionnement selon la revendication 1, **caractérisé par**ce que le message de réponse transmis à la première station mobile (MS1) en réponse à la consultation des données de position inclut les données de carte et les données de position au sujet de la deuxième station mobile (MS2), et que le message de réponse est décodé dans la première station mobile (MS1).

3. Un système de positionnement selon la revendication 1, **caractérisé par**ce que le message de réponse transmis à la première station mobile (MS1) en réponse à la consultation des données de position inclut seulement des données de position au sujet de la deuxième station mobile (MS2), et que les données de carte correspondant à la position de la deuxième station mobile (MS2) sont obtenues à partir du système traçant ou de la base de données (1) de la première station mobile (MS1), sur la base des données de position de la deuxième station mobile (MS2) reçue à la première station mobile (MS1), et que des données de position dans le message de réponse sont décodées dans la première station mobile (MS1).

4. Un système de positionnement selon des revendications précédentes l'unes des 1-3, **caractérisé** dans celle, afin la consultation des données de position à répondre manuellement à la deuxième station mobile (MS2), une option soit choisie dans le programme machine qui exploite le système de positionnement, qu'ou permet la réponse, ou la neutralise.

5. Un système de positionnement selon des revendications précédentes l'unes des 1-4, **caractérisé** dans cela, afin l'enquête de position à répondre automatiquement à la deuxième station mobile (MS2), un registre soit reliée à la mémoire de programme qui exploite le système de positionnement, qui contient les investigateurs de position, avantageusement une liste des nombres d'abonné ou Un-raccordements d'investigateurs, les enquêtes de position dont les deuxièmes réponses mobiles de la station (MS2) automatiquement, selon le programme qui exploite le système.

6. Un système de positionnement selon des revendications précédentes l'unes des 1-5, **caractérisé par**ce que la réponse à la consultation des données de position devient évidente à la première station mobile (MS1) automatiquement quand le système est exploité par le programme machine.

7. Un système de positionnement selon des revendications précédentes l'unes des 1-6, **caractérisé** dans celle, afin de montrer la réponse de consultation des données de position à la première station mobile (MS1) manuellement, une option est choisie dans le programme machine qui exploite le système de positionnement, que permet à la réponse d'être montré, ou la neutralise .

8. Un système de positionnement selon des revendications précédentes l'unes des 1-7, **caractérisé par**ce que le programme machine qui exploite le système de positionnement a au moins deux parts, sur quoi un article du programme machine, qui court ces phases :
- la formation de l'enquête de position,
- la transmission de l'enquête de position,
- la réception de la réponse à l'enquête de position et
- montrer de la position de la deuxième station mobile (MS2)
est situé dans la mémoire de programme de la première station mobile (MS1), et sur quoi le deuxième article du programme machine, qui court ces phases :
- la réception de l'enquête de position,
- la détermination de la position de la deuxième station mobile (MS2) et
- la transmission de la réponse à l'enquête de position
est situé dans la mémoire de programme de la deuxième station mobile (MS2).
